# EUROPEAN PATENT APPLICATION

(11) **EP 4 730 741 A1**
(43) Date of publication of application: **22.04.2026**
(21) Application number: 24206765.0
(22) Date of filing: 15.10.2024
(51) Int. Cl.: H04L 45/18, H04L 12/16, H04L 45/243, H04L 45/00

(54) **NETWORK INTERFACE AND METHOD FOR PROCESSING ETHERNET NETWORK FRAMES**

(71) Applicant: NXP B.V., 5656 AG Eindhoven (NL)
(72) Inventor: Hardman, James Lancelot, 5656 AG Eindhoven (NL); Pillar, John, 5656 AG Eindhoven (NL)
(74) Representative: Miles, John Richard

(57) **Abstract**

A method and apparatus for processing ethernet network frames is described. The method includes parsing a plurality of incoming network frames, comparing an incoming frame of the plurality of incoming network frames with the frame entries in a frame table. The frame table includes frame entries corresponding to previously received frames. Each frame entry includes a port field indicating ports which transmitted a previously received frame. If the incoming frame is a duplicate of a frame entry, a replica of an incoming frame is forwarded for each port which is not present in the port field of the frame entry. Alternatively, if all ports are present in the port field of the duplicate frame entry, the incoming duplicate frame is discarded.

## Description

### FIELD

This disclosure relates to a network interface and method for processing ethernet network frames in high-availability networks.

### BACKGROUND

Networks such as Ethernet networks may use various configurations to provide seamless failover if one of the network nodes fails. For ethernet networks, two common configurations are High-availability Seamless Redundancy (HSR) networks and Parallel redundancy protocol (PRP) networks which have operation standardized by the IEC 62439-3. Both networks have more than one independent path from a source to destination to ensure no information is lost. Consequently, a method for identifying and eliminating duplicate frames from the network is required.

### SUMMARY

Aspects of the disclosure are defined in the accompanying claims. In a first aspect, there is provided a network interface for an ethernet network, the network interface comprising: an ingress processor comprising a network frame input configured to be coupled to a plurality of network ports and to parse a plurality of incoming network frames; an egress processor comprising a network frame output configured to be coupled to the plurality of network ports; a memory coupled to the ingress processor and the egress processor and configured to store a plurality of previously received frame entries in a frame table, each previously received frame entry including a port field configured to indicate which of the plurality of network port transmitted the previously received frame; wherein the ingress processor is further configured to: compare an incoming frame of the plurality of incoming network frames with the frame entries in the frame table; in response to determining that the incoming frame is a duplicate of a frame entry: replicate the incoming frame to the egress processor for transmission via each of the plurality of network ports not present in the port field of the frame entry; and discard the incoming frame if all of the plurality of network ports are present in the port field of the frame entry.

In some embodiments, in response to determining the incoming frame is not a duplicate of a previously transmitted frame, the ingress processor is further configured to: create a new frame entry in the frame table; and forward the replicated frame to the egress processor.

In some embodiments, the egress processor is further configured to, for each port not present in the port field of the frame entry, in response to a respective egress destination queue being available, add the replicated frame to the respective egress destination queue and add a destination port of the replicated frame to the port field of the frame entry corresponding to the incoming frame. In some embodiments, the egress processor is further configured to, for each port not present in the port field of the frame entry, in response to a respective destination egress queue not being available, discard the replicated frame. In some embodiments, the memory is configured to store each frame entry of the plurality of frame entries for a predetermined time period. In some embodiments, the network ethernet interface is configured to operate according to the IEC 62439-3 standard.

In some embodiments, the ingress processor further comprises a series arrangement of: an ingress parse and classification module coupled to the network frame input; a destination determination module; a congestion and rate shaping module; a duplicate discard lookup module coupled to the memory; a resource allocator; and a replication and forwarding module configured to replicate the incoming frame for each destination port.

In some embodiments, the egress processor further comprises a series arrangement of: an egress queueing and congestion module coupled to the memory and comprising at least one egress destination frame queue; an egress scheduling and shaping module; and a transmission module coupled to each network port. In some embodiments, the network interface comprises a first network port and a second network port coupled to the network frame input and the network frame output. Embodiments of the network interface may be included in a doubly attached network node comprising a central processing unit (CPU) coupled to the network interface.

In a second aspect, there is provided a method for processing ethernet network frames, the method comprising: parsing a plurality of incoming network frames; comparing an incoming frame of the plurality of incoming network frames with a plurality of frame entries in a frame table, each frame entry corresponding to a previously received frame and including a port field configured to indicate network ports which transmitted the previously received frame; in response to determining the incoming frame is a duplicate of a frame entry: replicating an incoming frame for each network port not present in the port field of the frame entry; and discarding the incoming frame if all network ports are present in the port field of the frame entry.

In some embodiments, the method comprises, in response to determining the incoming frame is not a duplicate of a previously transmitted frame: creating a further frame entry in the frame table; and replicating the incoming frame for each network port.

In some embodiments, the method comprises: in response to a respective egress destination queue being available, adding the replicated frame to the respective egress destination queue and adding a destination network port of the replicated frame to the port field of the frame entry corresponding to the incoming frame.

In some embodiments, the method comprises retaining each frame entry of the plurality of frame entries for a predetermined time period. The method may operate according to the IEC 62439-3 standard.

### BRIEF DESCRIPTION OF THE DRAWINGS

In the figures and description like reference numerals refer to like features. Embodiments are now described in detail, by way of example only, illustrated by the accompanying drawings in which:
Figure 1A shows a high-availability seamless redundancy ( HSR) network including a doubly attached network node according to an embodiment.
Figure 1B show a frame structure for a HSR frame.
Figure 2A shows a Parallel redundancy protocol (PRP) network including a doubly attached network node according to an embodiment.
Figure 2B show a frame structure for a PRP frame.
Figure 3A illustrates a network interface for a doubly attached node according to an embodiment.
Figure 3B shows an example entry for a potential duplicate packet or frame.
Figure 4 shows a method for processing ethernet network frames according to an embodiment.
Figure 5 illustrates an ethernet network interface for a doubly attached node according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

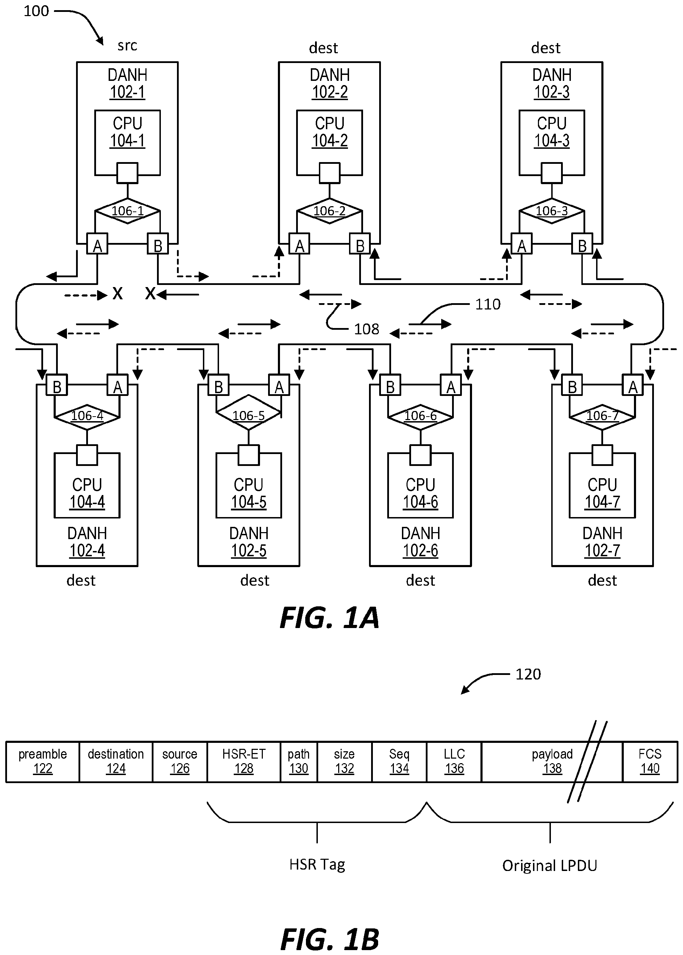

Figure 1A shows an HSR network 100 in a ring configuration. In other examples an HSR network may have a mesh configuration. Each network doubly attached node (DANH) 102 (102-1, 102-2, 102-3, 102-4, 102-5, 102-6, 102-7) includes a central processing unit (CPU) 104 (104-1, 104-2, 104-3, 104-4, 104-5, 104-6, 104-7) connected to a network interface 106 (106-1, 106-2, 106-3, 106-4, 106-5, 106-6, 106-7) according to an embodiment. Each network interface 106 is connected to 2 ethernet network ports denoted port A and port B. Each network port is connected to a port on a neighbouring node 102 which results in two paths between any two nodes 102 providing redundancy in case only one part is operational. Single attachment nodes (SAN) not shown may also be connected to an HSR network via a redundancy box also known as a RedBox. A source, for example DANH node 102-1 sends duplicate frames in two directions 108, 110 to destination nodes, for example DANH nodes 102-2 to 102-7. Figure 1B illustrates an HSR frame or packet 120 according to the IEC 62439-3 specification. The frame 120 includes the standard ethernet frame data including preamble 122, destination (MAC) address 124, source (MAC) address, LLC 136, payload 138 and frame check sequence (FCS) 140. In addition, to support the detection of duplicates an HSR tag is added including HSR-ET field 128, path 130 indicating the frame direction round the network 100, size 132 indicating the size of the link service data unit and sequence 134 which has a value determined by a sequence counter in DANH 102 which is incremented every time a frame is sent. Two copies of a frame will have the same sequence value.

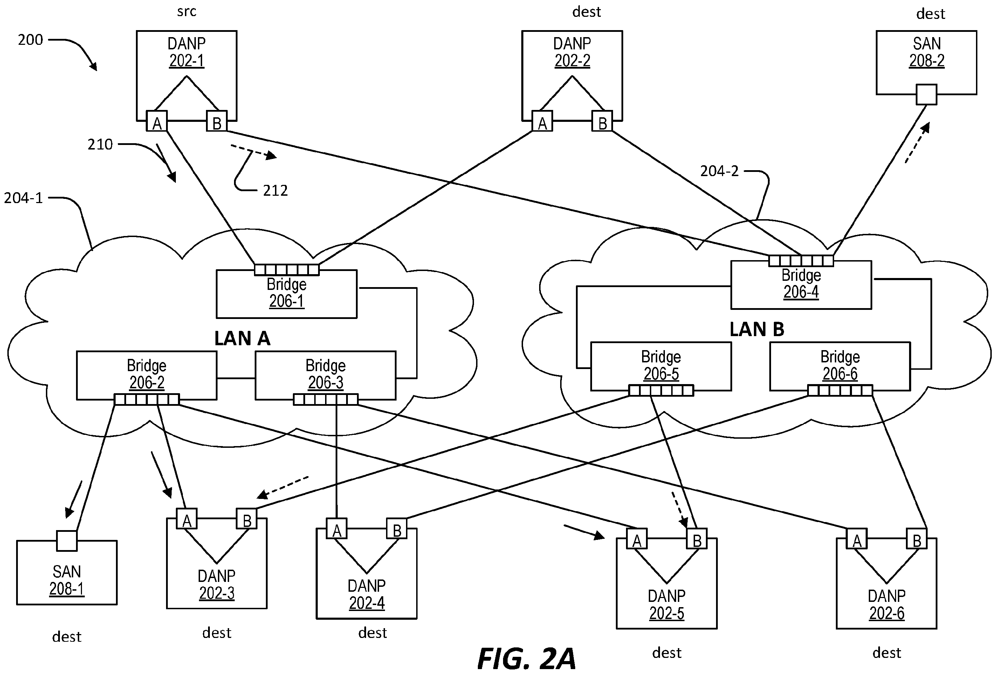

Figure 2A shows an example PRP network 200. Each network doubly attached node (DANP) 202 (202-1, 202-2, 202-3, 202-4, 202-5, 202-6) may be implemented similarly to DANH node 102 and include a CPU and network interface (not shown). For the PRP network 200 each port of a DANP node 202 is connected to a separate local area network. As illustrated, port A of each DANP node 202 is connected to a port in one of the bridges 206-1, 206-2, 206-3 in LAN A 204-1 and port B of each DANP node 202 is connected to a port in one of the bridges 206-4, 206-5, 206-6 in LAN B 204-2. The PRP network 200 includes two SAN nodes 208-1, 208-2 connected respectively to LAN A 204-1 and LAN B 204-2. A source node for example DANP node 202-1 sends duplicate frames 210,212 via port A and port B respectively. The first frame received by one of the destinations for example DANP 202-3 is accepted and a subsequent duplicate frame can be discarded.

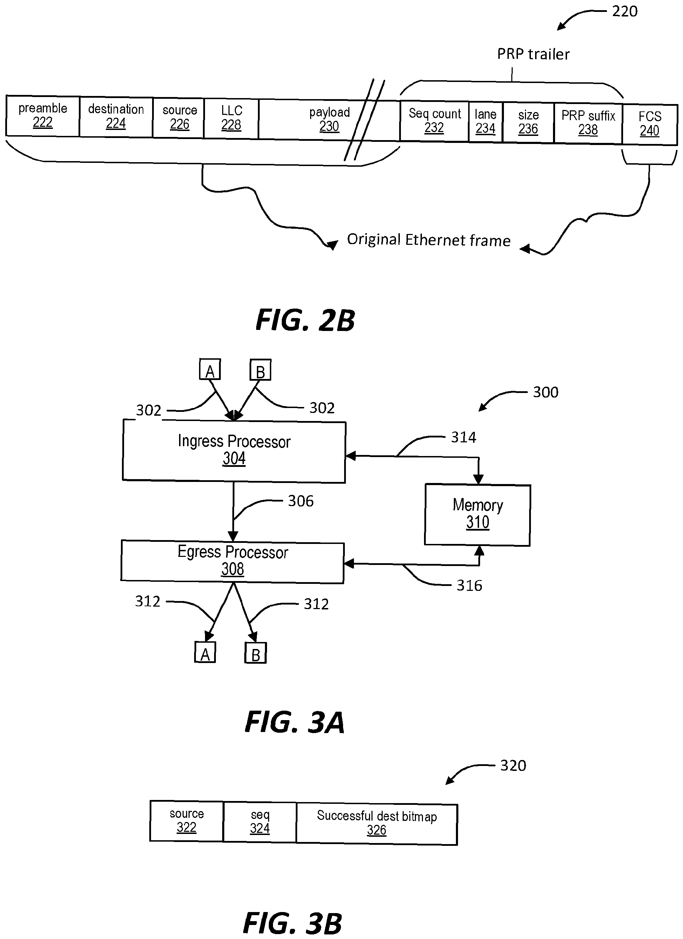

Figure 2B illustrates an PRP frame 220 according to the IEC 62439-3 specification. The frame includes the standard ethernet frame data including preamble 222, destination (MAC) address 224, source (MAC) address 226, LLC 228, payload 230 and frame check sequence (FCS) 240. In addition, to support the detection of duplicates a PRP trailer is added including sequence count 232 which has a value determined by a sequence counter in DANP node 202 which is incremented every time a frame is sent. Two copies of a frame will have the same sequence value. PRP trailer also include lane 234 indicating which through which network 204-1, 204-2 the frame was sent, size 236 indicating the size of the link service data unit and PRP suffix 238.

Figure 3A shows an ethernet network interface 300 according to an embodiment which may implement the network interface 106 or a network interface in DANP node 202. The ethernet network interface 300 includes an ingress processor 304 having a network frame input 302 which may be connected to multiple ethernet ports for example ports A and B in DANH node 102 and DANP node 202. The ingress processor output 306 may be connected to an egress processor 308. The ingress processor 304 may have a connection 314 to a memory 310 which stores a table of previously received frame ( packet) entries received within a set time frame. The egress processor 308 may have a connection 316 to the memory 310 and an egress processor network frame output 312 which may be connected to ethernet network ports for example ports A and B in DANP node 102 and DANH node 202. Figure 3B shows an example entry 320 for a potential duplicate packet or frame including a source address 322 corresponding to source address 126, 226, sequence number 324 corresponding to sequence number 134, 232 and a successful destination bitmap indicating to which intended destinations the frame has already been transmitted.

The ethernet interface 300 may implement the IEC 62439-3 duplicate discard function which identifies duplicate frames (packets) and prevents them from transmitting the frame to an egress destination to which a copy has already been transmitted.

Ethernet frames are received on the ingress processor input 302 from either or both of port A and port B. The ingress processor 304 may classify the frame and determine forwarding directions from the frame information. The ingress processor 304 may identify duplicate frames from entries in the memory 320 but prior to requesting resources for forwarding of the frame. If a frame is identified as not being a duplicate, a new entry will be established in the memory 310 for the frame in order to identify duplicates of this "original" previously received frame entry which are received within a predetermined time of the original frame. No egress destinations (network port destinations) are set in the entry when it is established. The entry will remain active for a fixed active period of time. While active, the entry may be used to record all the ports to which the original frame (and its duplicates) has been successfully forwarded for example by updating the successful destination bitmap 326 which may also be referred to as a port field indicating to which ports the frame was previously forwarded. The port field 326 is used to prune the set of ports to which any duplicate is forwarded. In many instances, this will result in the frame not being forwarded at all. When a frame is recognized as a duplicate the ingress processor 304 will adjust the forwarding destination ports to exclude any ports to which it has already been forwarded as indicated in the entry. The ingress processor 304 may then replicate the frame for each destination port and forward to the egress processor 308. When a frame is being forwarded to egress destinations, the egress processor 308 may push a replicated frame to a corresponding egress destination queue for scheduling and transmission. Should a particular queue become congested, it will stop accepting new frames, and that copy will not be sent to that egress destination. For each egress destination of a frame that is accepted by the egress queue, the egress processor 308 may make a filter update in the port field to the entry that it previously matched against. The network interface 300 may be used to implement an IEC 62439-3 duplicate discard function with a two-step update, which takes egress congestion into consideration, this may result in more robust implementation of the duplicate discard function. This may result in higher confidence in package de-duplication by reducing erroneous dropping of packages in high availability industrial networks The network interface 300 may be implemented in hardware or a combination of hardware and software. The term ingress processor is used herein refers to a circuit or module which processes incoming network data on the network ports to determine how the data should be handled, for example whether it should be blocked or forwarded. The term egress processor is used herein refers to a circuit or module which processes network data for transmission to an external network or destination.

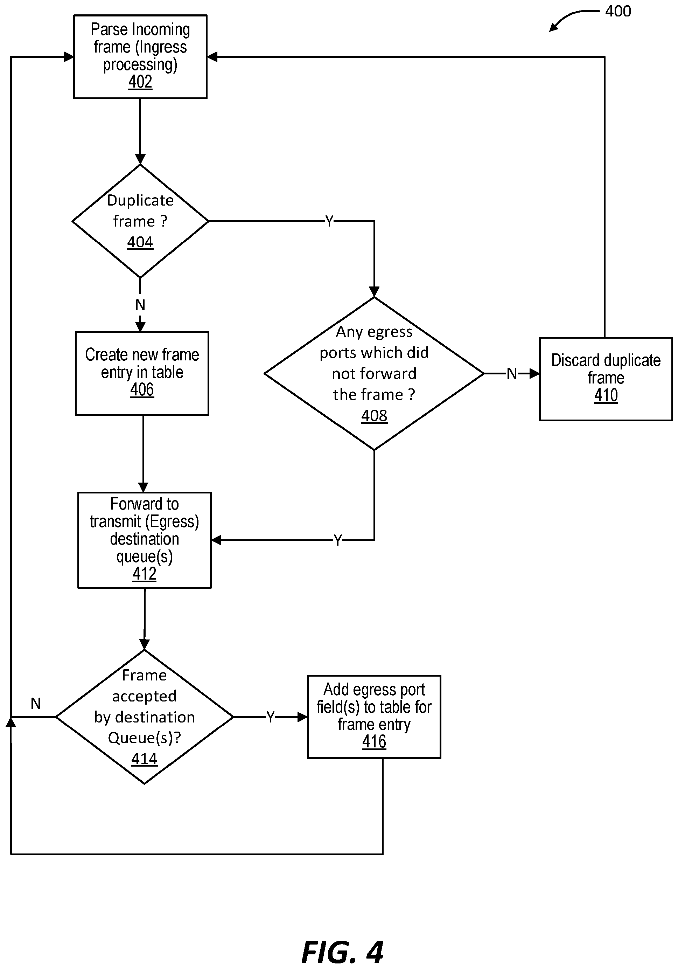

Figure 4 illustrates a method of processing ethernet frames 400 suitable for IEC 62439-3 compliant networks according to an embodiment. In step 402 an incoming frame ( packet) may be parsed. In step 402, the method may check whether the incoming frame is a duplicate of a previously received frame by looking up the previously received entries in a table for example using a hash lookup function. If the frame is a duplicate, then in step 408 the method checks whether there are any egress ports which did not previously forward the frame. If all egress ports have forwarded the frame previously then in step 410 the frame is discarded and the method 400 then returns to step 402. Returning to step 408, if some egress ports did not previously forward the frame, then in step 412 the frame is forwarded to only those destination queues which did not previously accept the frame. Returning to step 404, if no duplicate frame exists, then in step 406 a new frame entry is created in the table which is valid for a limited predetermined time. Following from step 406, in step 412 the frame is forwarded to the transmit destination queues which in this case will be for all destinations. Following from step 412, in step 414 the method checks if the frame has been accepted by one or more destination queues. If no destination queue has accepted the frame, the method returns to step 402. Otherwise, if one or more destination has been accepted, in step 416 the method adds successful egress destinations to the frame entry. Following from step 416 the method returns to step 402.

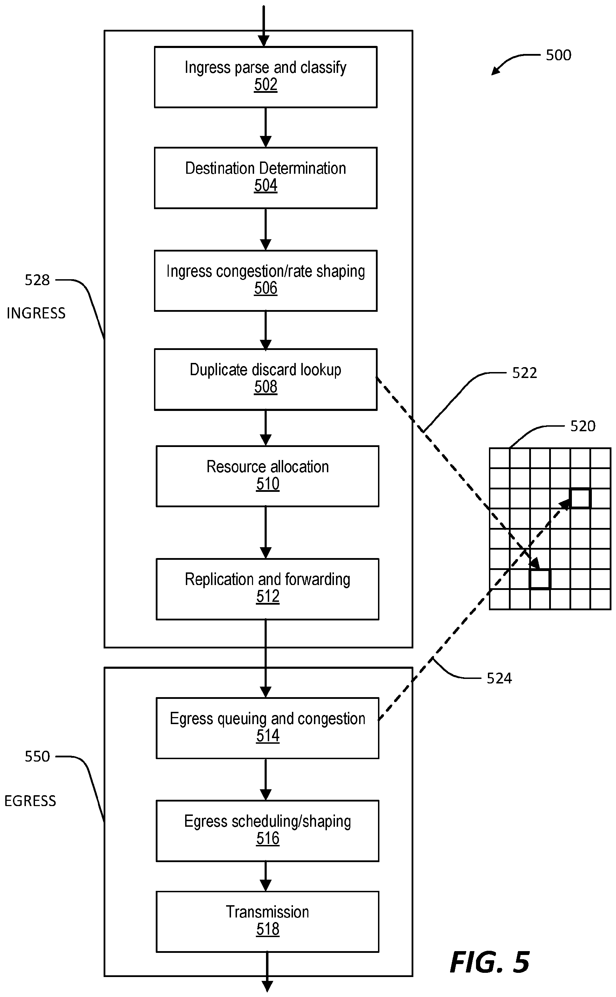

Figure 5 shows an ethernet network interface 500 according to an embodiment. The ethernet network interface includes an ingress processor 528, an egress processor 550 and a memory 520. The ingress processor 528 may include a series arrangement of an ingress parse and classifier 502, destination determination module 504, ingress congestion and rate shaping module 506, duplicate discard lookup module 508, resource allocator 510 and replication and forwarding module 512. The ingress parse and classifier receives incoming frames and classifies the frames according to sequence number and mac source address from the relevant field in the frame. After classification, the frame destination is determined by the destination determination module 504 which extracts the destination from the relevant field in the frame (frame). Following destination determination, the rate shaping and ingress congestion module may implement for example IEEE 802.1 Qci Flow Metering / MEF 10 and allocate ingress frames to buffer pools. The duplicate discard and lookup module 508 receives the frames and checks whether a duplicate entry is present and has been forwarded to all ports in which case the frame is discarded. If there is no duplicate entry in which case the duplicate discard lookup module 508 may add an entry 522 to the table in the memory 520 including the sequence number and the source address. No egress destinations are set in the entry 522 when it is established. The entry 522 will only remain active (valid) for a fixed period of time. Following the discard lookup, the resource allocator 510 may allocate resources for replicating the frame for transmission via different ports. The replication and forwarding module 512 may then replicate the frame and forward the replicated frame(s) for egress processing by the egress processor 550. The egress processor 550 may include a series arrangement of egress queuing and congestion module 514, egress scheduling and shaping module 516 and transmission module 518. The egress queuing and congestion module 514 receives frames for forwarding to egress destinations, each forwarding destination is pushed to a queue before it can be scheduled and transmitted. If the queue become congested, egress queuing and congestion module 514 stops accepting new frames, and that copy will not be sent to that egress destination. The egress queuing and congestion module 514 may then apply a filter update to an entry 524 for that frame to indicate it was not transmitted to that egress destination. This filter update may be used by a subsequent duplicate frame received by the ingress processor 528. Following the egress queuing and congestion module 514, the scheduling and shaping module 516 schedules the queued frames for transmission and the transmission module 518 transmits the frames via the ports.

Embodiments described herein may improve a duplicate package discard function for IEC 62439-3 by ensuring that frames are accepted by the egress queues to a certain port; this may reduce erroneous package drops in congestion situations on switch. Embodiments may add egress port fields to a hash table of known frames to monitor which egress ports forwarded the frames. If a duplicate frame is received, embodiments may check whether there are any ports which did not successfully forward the frame before discarding on ingress. Although the illustrated embodiments are described with reference to IEC 62439-3, it will be appreciated that other embodiments of network interfaces may be used for other networks which replicate transmission via a number of different nodes to improve reliability.

A method and apparatus for processing ethernet network frames is described. The method includes parsing a plurality of incoming network frames, comparing an incoming frame of the plurality of incoming network frames with the frame entries in a frame table. The frame table includes frame entries corresponding to previously received frames. Each frame entry includes a port field indicating ports which transmitted a previously received frame. If the incoming frame is a duplicate of a frame entry, a replica of an incoming frame is forwarded for each port which is not present in the port field of the frame entry. Alternatively, if all ports are present in the port field of the duplicate frame entry, the incoming duplicate frame is discarded.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A network interface for an ethernet network, the network interface comprising:
an ingress processor comprising a network frame input configured to be coupled to a plurality of network ports and to parse a plurality of incoming network frames;
an egress processor comprising a network frame output configured to be coupled to the plurality of network ports;
a memory coupled to the ingress processor and the egress processor and configured to store a plurality of previously received frame entries in a frame table, each previously received frame entry including a port field configured to indicate which of the plurality of network port transmitted a previously received frame;
wherein the ingress processor is further configured to:
compare an incoming frame of the plurality of incoming network frames with the plurality of previously received frame entries;
in response to determining that the incoming frame is a duplicate of a frame entry:
replicate the incoming frame to the egress processor for transmission via each of the plurality of network ports not present in the port field of the frame entry; and
discard the incoming frame if all of the plurality of network ports are present in the port field of the frame entry.

2. The network interface of claim 1, wherein in response to determining the incoming frame is not a duplicate of a previously transmitted frame, the ingress processor is further configured to:
create a further frame entry in the frame table; and
forward a replicated frame of the incoming frame to the egress processor.

3. The network interface of any preceding claim, wherein the egress processor is further configured to, for each port not present in the port field of the frame entry, in response to a respective egress destination queue being available, add the replicated frame to the respective egress destination queue and add a destination port of the replicated frame to the port field of the frame entry corresponding to the incoming frame.

4. The network interface of any preceding claim, wherein the egress processor is further configured to, for each port not present in the port field of the frame entry, in response to a respective destination egress queue not being available, discard the replicated frame.

5. The network interface of any preceding claim, wherein the memory is configured to store each frame entry of the plurality of previously received frame entries for a predetermined time period.

6. The network interface of any preceding claim configured to operate according to the IEC 62439-3 standard.

7. The network interface of any preceding claim, wherein the ingress processor further comprises a series arrangement of:
an ingress parse and classification module coupled to the network frame input;
a destination determination module;
a congestion and rate shaping module;
a duplicate discard lookup module coupled to the memory;
a resource allocator; and
a replication and forwarding module configured to replicate the incoming frame for each destination network port.

8. The network interface of any preceding claim, wherein the egress processor further comprises a series arrangement of:
an egress queueing and congestion module coupled to the memory and comprising at least one egress destination frame queue;
an egress scheduling and shaping module; and
a transmission module coupled to each network port.

9. The network interface of any preceding claim wherein the plurality of network ports comprises a first network port and a second network port coupled to the network frame input and the network frame output.

10. A doubly attached network node comprising a central processing unit (CPU) coupled to the network interface of claim 9.

11. A method for processing ethernet network frames, the method comprising:
parsing a plurality of incoming network frames;
comparing an incoming frame of the plurality of incoming network frames with a plurality of frame entries in a frame table, each frame entry corresponding to a previously received frame and including a port field configured to indicate network ports which transmitted the previously received frame;
in response to determining the incoming frame is a duplicate of a frame entry:
replicating an incoming frame for each network port not present in the port field of the frame entry; and
discarding the incoming frame if all network ports are present in the port field of the frame entry.

12. The method of claim 11 further comprising, in response to determining the incoming frame is not a duplicate of a previously transmitted frame:
creating a further frame entry in the frame table; and
replicating the incoming frame for each network port.

13. The method of claim 11 or 12, further comprising:
in response to a respective destination queue being available, adding a replicated frame to the respective destination queue and updating the frame entry corresponding to the incoming frame by adding a destination network port of the replicated frame to the port field.

14. The method of any of claims 12 to 13 further comprising retaining each frame entry of the plurality of frame entries for a predetermined time period.

15. The method of any of claims 12 to 14, configured to operate according to the IEC 62439-3 standard.
